(19) Europäisches Patentamt
European Patent Office
Office européen des brevets

(11) **EP 3 852 175 B1**

(12) **EUROPEAN PATENT SPECIFICATION**

(45) Date of publication and mention
of the grant of the patent:
**19.04.2023  Bulletin 2023/16**

(21) Application number: **19859230.5**

(22) Date of filing: **30.07.2019**

(51) International Patent Classification (IPC):
**H01M 4/525** (2010.01)        **H01M 4/505** (2010.01)
**C01G 53/00** (2006.01)

(52) Cooperative Patent Classification (CPC):
**C01G 53/006; C01G 53/42; C01G 53/50;**
**H01M 4/1391; H01M 4/525;** C01P 2004/51;
C01P 2004/61; C01P 2006/12; H01M 2004/028;
Y02E 60/10

(86) International application number:
**PCT/JP2019/029805**

(87) International publication number:
**WO 2020/054236 (19.03.2020 Gazette 2020/12)**

(54) **METHOD FOR PRODUCING POSITIVE ELECTRODE ACTIVE MATERIAL FOR LITHIUM ION SECONDARY BATTERY**

VERFAHREN ZUR HERSTELLUNG VON POSITIVELEKTRODEN-AKTIVMATERIAL FÜR LITHIUM-IONEN-SEKUNDÄRBATTERIE

PROCÉDÉ DE PRODUCTION DE MATÉRIAU ACTIF D'ÉLECTRODE POSITIVE POUR BATTERIE SECONDAIRE AU LITHIUM-ION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **14.09.2018   JP 2018172816**

(43) Date of publication of application:
**21.07.2021   Bulletin 2021/29**

(73) Proprietor: **Kao Corporation**
**Chuo-ku,**
**Tokyo 103-8210 (JP)**

(72) Inventors:
• **AKAGI, Ryuichi**
  **Wakayama-shi, Wakayama 640-8580 (JP)**
• **HIRAISHI, Atsushi**
  **Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
WO-A1-2009/099158        JP-A- 2011 219 328
JP-A- 2015 147 689        JP-A- 2017 527 511

**Description**

Technical Field

The present disclosure relates to a method for producing a positive electrode active material for a lithium ion secondary battery.

Background Art

Lithium ion secondary batteries have a higher energy density per weight or volume than, e.g., lead storage batteries and nickel-metal hydride batteries, and thus contribute to the size reduction and weight reduction of electronic devices to which the lithium ion secondary batteries are mounted. In recent years, hybrid vehicles and electric vehicles have been spread to achieve zero-emissions of vehicles. The enhancement of the performance of the lithium ion secondary batteries is an important key to the improvement of the fuel consumption and extension of the travel distance of the hybrid vehicles and electric vehicles.

As positive electrode active materials of the lithium ion secondary batteries, lithium-containing composite oxides such as lithium cobalt composite oxides and lithium nickel composite oxides have been widely used.

As one of methods for improving battery characteristics, for example, it has been proposed to use a positive electrode active material having a high specific surface area obtained by controlling particle sizes of metal hydroxide particles that are a raw material for a positive electrode active material. For example, JP 2011-219328 A (Patent Document 1) indicates that cobalt hydroxide particles having a small particle size and a narrow particle size distribution can be obtained by mixing a solution containing a cobalt compound and a solution containing a neutralizing agent and an acrylic polymer dispersant such as sodium polyacrylate (e.g., paragraphs [0027] and [0037] in the same document).

Document JP 2011-219328 A discloses that cobalt hydroxide particles having a small particle size and a narrow particle size distribution can be obtained by mixing a solution containing a cobalt compound and a solution containing a neutralizing agent and an acrylic polymer dispersant such as sodium polyacrylate. The cobalt hydroxide particles can be used for manufacturing cobalt compound particles used as electrode active material.

Disclosure of Invention

One aspect of the present disclosure relates to a method for producing a positive electrode active material for a lithium ion secondary battery, the positive electrode active material consisting of a lithium metal composite oxide (also referred to as the "producing method of the present disclosure"). The method includes the following steps (1) and (2):

(1) mixing a dispersant (component A) being a copolymer containing a constitutional unit a1 derived from (meth)acrylic acid and a constitutional unit a2 derived from unsaturated dibasic acid or its anhydride, a salt (component B) of at least one metallic element selected from nickel, cobalt, manganese, and aluminium, an alkali (component C), and an aqueous medium to precipitate, as a coprecipitate, a metal hydroxide containing the at least one metallic element selected from nickel, cobalt, manganese, and aluminium; and

(2) baking a mixture containing the metal hydroxide obtained in the step (1) and a lithium compound to obtain the lithium metal composite oxide.

Description of the Invention

In conventional methods, the control of particle sizes of metal hydroxide particles has not been sufficient. In order to further improve battery characteristics, it is required to produce metal hydroxide particles having few fine particles, few coarse particles, and a particle diameter with a narrower particle size distribution.

One or more embodiments of the present disclosure provide a method for producing a positive electrode active material for a lithium ion secondary battery that can improve battery characteristics of a lithium ion secondary battery, and a method for producing a positive electrode for a lithium ion secondary battery in which the positive electrode active material is used.

One aspect of the present disclosure relates to a method for producing a positive electrode active material for a lithium ion secondary battery, the positive electrode active material consisting of a lithium metal composite oxide. The method includes the following steps (1) and (2):

(1) mixing a dispersant (component A) being a copolymer containing a constitutional unit a1 derived from (meth)acrylic acid and a constitutional unit a2 derived from unsaturated dibasic acid or its anhydride, a salt (component B) of at least one metallic element selected from nickel, cobalt, manganese, and aluminium, an alkali (component C), and an aqueous medium to precipitate, as a coprecipitate, a metal hydroxide containing the at least one metallic element selected from nickel, cobalt, manganese, and aluminium; and
(2) baking a mixture containing the metal hydroxide obtained in the step (1) and a lithium compound to obtain the lithium metal composite oxide.

Another aspect of the present disclosure relates to a method for producing a positive electrode for a lithium ion secondary battery. The method includes the following steps (3) and (4):

(3) mixing the positive electrode active material for a lithium ion secondary battery obtained by the producing method of the present disclosure, a conductive material, and a binder to obtain a positive electrode mixture paste; and
(4) applying the positive electrode mixture paste to a positive electrode current collector.

One aspect of the present disclosure can exhibit the effect of providing a method for producing a positive electrode active material for a lithium ion secondary battery that can improve battery characteristics of a lithium ion secondary battery or a method for producing a positive electrode for a lithium ion secondary battery.
The details of the mechanism for exhibiting this effect of the present disclosure are still not clear, but may be assumed as follows.
In the present disclosure, the dispersant (component A) being a copolymer having a high carboxylic acid concentration such as a copolymer containing a constitutional unit derived from (meth)acrylic acid and a constitutional unit derived from unsaturated dibasic acid or its anhydride is mixed with the salt (component B) of at least one metallic element selected from nickel, cobalt, manganese, and aluminium, and the alkali (component C). Thus, the precipitation rate of the metal hydroxide may be slower than the precipitation rate when an acrylic polymer having a low carboxylic acid concentration such as sodium polyacrylate is used as a dispersant, and primary particles may have uniform particle diameters. In addition, the aggregation of particles may be suppressed, and coarse particles contained in the metal hydroxide particles may be reduced. Therefore, it may be possible to make the particle size distribution of the metal hydroxide particles sharp. The use of such a metal hydroxide as a positive electrode active material reduces particles that do not function as an active material in the occurrence of the expansion and contraction of the positive electrode active material in a charge-discharge cycle. Therefore, it is possible to improve the battery characteristics of a lithium ion secondary battery.
However, this is only an assumption and the present disclosure is not limited to the above mechanism.

[Step (1)]

In the step (1), the dispersant (component A), the salt (component B), and the alkali (component C), and the aqueous medium are mixed to precipitate the metal hydroxide as a coprecipitate. In the step (1), other components described later may further be mixed. As long as a metal hydroxide can be precipitated in a mixed aqueous solution obtained by mixing the component A, the component B, the component C, and the aqueous medium, and optional components as needed, the order of mixing the component A, the component B, the component C, and the aqueous medium, and other components is not particularly limited.
For example, in one embodiment, in the step (1), the component B and the component C can be simultaneously or sequentially added to an aqueous solution containing the component A, and at the same time or thereafter, these can be stirred to precipitate the metal hydroxide.
In another embodiment, in the step (1), the component A and the component C can be simultaneously or sequentially added to an aqueous solution containing the component B, and at the same time or thereafter, these can be stirred to precipitate the metal hydroxide.
In yet another embodiment, in the step (1), the component C can be added to an aqueous solution containing the component A and the component B, and at the same time or thereafter, these can be stirred to precipitate the metal hydroxide.

<Dispersant (Component A)>

The dispersant (component A) mixed in the step (1) is the copolymer containing the constitutional unit a1 derived from (meth)acrylic acid and the constitutional unit a2 derived from unsaturated dibasic acid or its anhydride. The constitutional units a1 and a2 may be used individually or in combinations of two or more. The component A may be used individually or in a combination of two or more.
In one or more embodiments, the (meth)acrylic acid may be at least one selected from acrylic acid, methacrylic acid, and their salts, and from the viewpoint of improving the battery characteristics, acrylic acid or its salts are preferred.
In one or more embodiments, the unsaturated dibasic acid or its anhydride may be maleic acid or its salt, fumaric acid or its salt, itaconic acid or its salt, or maleic anhydride. From the viewpoint of improving the battery characteristics, at least one selected from maleic acid, its salt, and maleic anhydride is preferred.

The above salts may be at least one selected from an ammonium salt, an organic amine salt, an alkali metal salt, and an alkaline earth metal salt.

Specifically, the component A is preferably an acrylic acid-maleic acid copolymer or its salt from the viewpoints of narrowing the particle size distribution of the metal hydroxide particles and improving the battery characteristics.

In one or more embodiments, the component A can contain another constitutional unit. In one or more embodiments, from the viewpoints of narrowing the particle size distribution of the metal hydroxide particles and improving the battery characteristics, a total amount of the constitutional unit a1 and the constitutional unit a2 in all constitutional units constituting the copolymer being the component A is preferably 90 mol% or more, more preferably 95 mol% or more, and further preferably 100 mol%.

From the viewpoints of the dispersibility of the coprecipitate, narrowing the particle size distribution of the metal hydroxide particles, and improving the battery characteristics, a molar ratio (a1/a2) of the constitutional unit a1 to the constitutional unit a2 in the component A is preferably 74/26 to 91/9, more preferably 74/26 to 90/10, even more preferably 80/20 to 88/12, and further preferably 82/18 to 88/12.

In one or more embodiments, the dispersant (component A) may be neutralized with ammonium (or its salt) or an organic amine (or its salt). Specifically, the ammonium (or its salt) or organic amine (or its salt) used for the neutralization may be, e.g., at least one selected from an aqueous ammonia solution, monoethanolamine, diethanolamine, triethanolamine, ethylenediamine, diethylenetriamine, tributylamine, tetramethyl ammonium hydroxide, and their salts. A degree of neutralization of the component A is not particularly limited, but is preferably 50 mol% to 200 mol% with respect to 100 mol% of neutralizable functional groups (e.g., a carboxy groups) contained in the component A from the viewpoints of the dispersibility of the coprecipitate, narrowing the particle size distribution of the metal hydroxide particles, and improving the battery characteristics. The degree of neutralization can be calculated by, e.g., pH measurement.

The neutralizing agent used here is different from the component C, and is not included in the component C.

A method for producing the dispersant (component A) is not particularly limited, and can be obtained by, e.g., the polymerization reaction of (meth)acrylic acid with unsaturated dibasic acid or its anhydride. For the polymerization reaction, for example, a known polymerization initiator or chain transfer agent can be used. The polymerization initiator may be, e.g., hydrogen peroxide. Examples of the chain transfer agent include hydrogen peroxide, mercaptoethanol, isopropyl alcohol, mercaptopropionic acid, and carbon tetrachloride.

From the viewpoints of narrowing the particle size distribution of the metal hydroxide particles and improving the battery characteristics, a weight average molecular weight of the dispersant (component A) is preferably 25,000 or more, more preferably 30,000 or more, and further preferably 35,000 or more. Furthermore, the weight average molecular weight of the component A is preferably 60,000 or less, more preferably 58,000 or less, even more preferably 56,000 or less, much more preferably 50,000 or less, and further preferably 45,000 or less. More specifically, the weight average molecular weight of the component A is preferably 25,000 or more and 60,000 or less, more preferably 30,000 or more and 58,000 or less, even more preferably 35,000 or more and 56,000 or less, much more preferably 35,000 or more and 50,000 or less, and further preferably 35,000 or more and 45,000 or less. The weight average molecular weight of the component A can be measured by, e.g., a method as described in Examples.

From the viewpoints of the dispersibility of the coprecipitate, narrowing the particle size distribution of the metal hydroxide particles, and improving the battery characteristics, an average carboxylic acid concentration (molar equivalent/kg) of the dispersant (component A) per molecule is preferably 14.0 molar equivalent/kg or more, more preferably 14.1 molar equivalent/kg or more, and further preferably 14.2 molar equivalent/kg or more. Furthermore, from the same viewpoints and from the viewpoint of producing the dispersant, the average carboxylic acid concentration (molar equivalent/kg) of the component A per molecule is preferably 16.0 molar equivalent/kg or less, more preferably 15.5 molar equivalent/kg or less, and further preferably 15.0 molar equivalent/kg or less. More specifically, the average carboxylic acid concentration of the component A per molecule is preferably 14.0 molar equivalent/kg or more and 16.0 molar equivalent/kg or less, more preferably 14.0 molar equivalent/kg or more and 15.5 molar equivalent/kg or less, even more preferably 14.1 molar equivalent/kg or more and 15.0 molar equivalent/kg or less, and further preferably 14.2 molar equivalent/kg or more and 15.0 molar equivalent/kg or less.

The average carboxylic acid concentration (molar equivalent/kg) of the dispersant (component A) per molecule can be calculated from the amounts of (meth)acrylic acid and unsaturated dibasic acid used for the production of the dispersant. When a salt of (meth)acrylic acid, a salt of unsaturated dibasic acid, or an anhydride of unsaturated dibasic acid is used, the average carboxylic acid concentration is calculated in terms of carboxylic acid.

From the viewpoints of narrowing the particle size distribution of the metal hydroxide particles and improving the battery characteristics, in the step (1), a blending amount of the dispersant (component A) is preferably 0.01% by mass or more, more preferably 0.05% by mass or more, and further preferably 0.1% by mass or more in the mixed aqueous solution obtained by mixing the component A, the component B, the component C, the aqueous medium, and other components. Furthermore, from the viewpoint of preventing a salt of the metallic element from aggregating due to the presence of an excessive amount of the dispersant, the blending amount of the component A is preferably 5% by mass or less, more preferably 3% by mass or less, and further preferably 1% by mass or less. More specifically, the blending amount of the component A is preferably 0.01% by mass or more and 5% by mass or less, more preferably 0.05% by mass or more and 3% by mass or less, and further preferably 0.1% by mass or more and 1% by mass or less. When the component A is used in a combination of two or more, the blending amount of the component A indicates the total blending amount of these. Moreover, the blending amount of the component A indicates a blending amount in terms of acid.

<Salt (component B)>

The salt (component B) mixed in the step (1) is the salt containing at least one metallic element selected from nickel (Ni), cobalt (Co), manganese (Mn), and aluminium (Al). Examples of the salt include sulfate, carbonate, nitrate, hydrochloride, and acetate. From the viewpoint of easily controlling the particle diameter of the coprecipitate, at least one selected from sulfate, carbonate, and nitrate is preferred.

From the viewpoint of easily controlling the particle diameter of the coprecipitate, at least one sulfate, carbonate, and sulfate of at least one metallic element selected from Ni, Co, Mn, and Al is preferred, and at least one sulfate of at least one metallic element selected from Ni, Co, Mn, and Al is more preferred. The component B may be used individually or in a combination of two or more.

Examples of the sulfate of Ni include nickel(II) sulfate anhydrate, nickel(II) sulfate hexahydrate, and nickel(II) sulfate heptahydrate.

Examples of the sulfate of Co include cobalt(II) sulfate anhydrate, cobalt(II) sulfate monohydrate, and cobalt(II) sulfate heptahydrate.

Examples of the sulfate of Mn include manganese(II) sulfate anhydrate, manganese(II) sulfate monohydrate, manganese(II) sulfate tetrahydrate, manganese(II) sulfate pentahydrate, and manganese(II) sulfate heptahydrate.

Examples of the sulfate of Al include aluminium(III) sulfate anhydrate and aluminium(III) sulfate hexadecahydrate.

In one embodiment, from the viewpoint of improving the battery characteristics, the salt (component B) preferably includes a Ni salt, a Co salt, and an Al salt. In other words, the metal hydroxide obtained in the step (1) is preferably a ternary hydroxide containing Ni, Co, and Al.

From the viewpoint of improving the battery characteristics, a ratio (molar ratio) of Ni contained in the salt (component B) with respect to a total molar amount of Ni, Co, Mn, and Al contained in the component B is preferably 0.5 to 0.9, more preferably 0.6 to 0.9, and further preferably 0.7 to 0.9.

From the viewpoints of productivity and controlling the particle size distribution, in the step (1), a blending amount of the salt (component B) is preferably 5.0% by mass or more, more preferably 8.0% by mass or more, and further preferably 10.0% by mass or more in the mixed aqueous solution obtained by mixing the component A, the component B, the component C, the aqueous medium, and other components. Furthermore, the blending amount of the component B is preferably 30.0% by mass or less, more preferably 20.0% by mass or less, and further preferably 17.5% by mass or less. More specifically, the blending amount of the component B is preferably 5.0% by mass or more and 30.0% by mass or less, more preferably 8.0% by mass or more and 20.0% by mass or less, and further preferably 10.0% by mass or more and 17.5% by mass or less. When the component B is used in a combination of two or more, the blending amount of the component B indicates the total blending amount of these.

From the viewpoints of the dispersibility of the coprecipitate, narrowing the particle size distribution of the metal hydroxide particles, and improving the battery characteristics, in the step (1), a mass ratio (A/B) of the dispersant (component A) to the salt (component B) is preferably 0.1/100 or more, more preferably 0.5/100 or more, and further preferably 1.0/100 or more in the mixed aqueous solution obtained by mixing the component A, the component B, the component C, the aqueous medium, and other components. Furthermore, the mass ratio A/B is preferably 5.0/100 or less, more preferably 4.0/100 or less, and further preferably 2.0/100 or less. More specifically, the mass ratio A/B is preferably 0.1/100 or more and 5.0/100 or less, more preferably 0.5/100 or more and 4.0/100 or less, and further preferably 1.0/100 or more and 2.0/100 or less.

<Alkali (component C)>

Examples of the alkali (component C) mixed in the step (1) include ammonia, lithium hydroxide, sodium hydroxide, and potassium hydroxide. The component C may be used individually or in a combination of two or more. A blending amount of the component C can be appropriately set in consideration of, e.g., the blending amount of the component A and the pH of the mixed aqueous solution obtained by mixing the components. Specifically, from the viewpoint of easily controlling the particle diameter of the coprecipitate, the blending amount of the component C is preferably 4.0% by mass or more, more preferably 6.0% by mass or more, and further preferably 7.0% by mass or more.

Furthermore, from the same viewpoint, the blending amount of the component C is preferably 25.0% by mass or less, more preferably 16.0% by mass or less, and further preferably 12.0% by mass or less. More specifically, the blending amount of the component C is preferably 4.0% by mass or more and 25.0% by mass or less, more preferably 6.0% by mass or more and 16.0% by mass or less, and further preferably 6.0% by mass or more and 12.0% by mass or less.

<Aqueous medium>

Examples of the aqueous medium mixed in the step (1) include water such as ion exchanged water, distilled water, and ultrapure water.

<Other components>

Examples of the other components that may be mixed in the step (1) include the neutralizing agent of the component A, salts other than the component B, and a pH regulator. The neutralizing agent of the component A may be, e.g., an aqueous ammonia.

From the viewpoint of easily precipitating the coprecipitate, in the step (1), a temperature of the mixed aqueous solution obtained by mixing the component A, the component B, the component C, and the aqueous medium, and optional components as needed is preferably 5°C to 90°C, more preferably 20°C to 80°C, even more preferably 25°C to 70°C, and further preferably 30°C to 65°C.

In one or more embodiments, the step (1) may further include filtering and washing the precipitated metal hydroxide, and drying the metal hydroxide after washing.

Examples of the filtering include pressure filtration, filtration under reduced pressure, a rotary filter, centrifugal separation, a filter press, and cross flow filtration.

From the viewpoint of removing impurities contained in the metal hydroxide, the washing is performed with, e.g., water, and preferably with ion exchanged water.

As the drying conditions, the drying temperature can be, e.g., 30°C to 100°C, and the drying time can be, e.g., 1 hour to 30 hours.

From the viewpoint of improving the battery characteristics, a specific surface area of the metal hydroxide obtained in the step (1) is preferably 0.05 $m^2/g$ or more, more preferably 0.1 $m^2/g$ or more, and further preferably 0.2 $m^2/g$ or more. Furthermore, the specific surface area of the metal hydroxide is preferably 1.5 $m^2/g$ or less, more preferably 1.3 $m^2/g$ or less, even more preferably 1.0 $m^2/g$ or less, and further preferably 0.8 $m^2/g$ or less. More specifically, the specific surface area of the metal hydroxide is preferably 0.05 $m^2/g$ or more and 1.5 $m^2/g$ or less, more preferably 0.1 $m^2/g$ or more and 1.3 $m^2/g$ or less, even more preferably 0.1 $m^2/g$ or more and 1.0 $m^2/g$ or less, and further preferably 0.2 $m^2/g$ or more and 0.8 $m^2/g$ or less. In the present disclosure, the specific surface area of the metal hydroxide can be measured by a BET method, and specifically can be measured by a method as described in Examples.

From the viewpoint of improving the battery characteristics, a volume average particle diameter (D50) of the metal hydroxide obtained in the step (1) is preferably 1 pm or more, more preferably 5 um or more, and further preferably 8 um or more. Furthermore, the volume average particle diameter (D50) of the metal hydroxide is preferably 20 pm or less, more preferably 15 pm or less, and further preferably 11 pm or less. More specifically, the volume average particle diameter (D50) of the metal hydroxide is preferably 1 um or more and 20 um or less, more preferably 5 pm or more and 15 pm or less, and further preferably 8 um or more and 11 pm or less. In the present disclosure, the volume average particle diameter (D50) indicates a volume average particle diameter measured by a laser diffraction scattering method, and means a particle diameter at which the cumulative volume of the particles reaches 50% on the cumulative volume distribution curve, provided that the total volume of the particle size distribution obtained on the volume basis is set to be 100%. The volume average particle diameter (D50) can be measured using a laser diffraction/scattering particle size distribution analyzer, and specifically can be measured by a method as described in Examples.

From the viewpoint of improving the battery characteristics, the particle size distribution of the metal hydroxide obtained in the step (1) that is measured by the laser diffraction scattering method is preferably narrow (i.e., sharp). In other words, a value of the metal hydroxide particles calculated by the expression: (D90 - D10)/D50 is preferably 1 or less, more preferably 0.9 or less, and further preferably 0.8 or less, provided that D10 represents a particle diameter corresponding to a particle diameter at which the cumulative volume reaches 10% from the small particle diameter side, D50 represents a particle diameter corresponding to a particle diameter at which the cumulative volume reaches 50% from the small particle diameter side, and D90 represents a particle diameter corresponding to a particle diameter at which the cumulative volume reaches 90% from the small particle diameter side in the particle size distribution measured by the laser diffraction scattering method.

In the present disclosure, the value calculated by the expression (D90 - D10)/D50 indicates a variation in the particle diameters. When the value is more than 1, the value indicates that fine particles or coarse particles are present in a state where the particle size distribution is wide. When the value is 1 or less, the value indicates that few fine particles and few coarse particles are mixed in a state where the particle size distribution is narrow (i.e., sharp). The particle diameters D10 and D90 can be measured using a laser diffraction/scattering particle size distribution analyzer, and specifically can be measured by the method as described in Examples.

[Step (2): baking]

In the step (2), the mixture containing the metal hydroxide obtained in the step (1) and the lithium compound is baked to obtain the lithium metal composite oxide.

Examples of the lithium compound used in the step (2) include lithium hydroxide and lithium carbonate.

From the viewpoint of the stability of the compound, in the mixture in the step (2), a ratio (mixture ratio) of a molar amount of Li contained in the lithium compound with respect to the total molar amount of Ni, Co, Mn, and Al contained in the metal hydroxide is preferably 0.80 or more, more preferably 0.90 or more, and further preferably 0.95 or more. Furthermore, the ratio (mixture ratio) of the molar amount of Li contained in the lithium compound with respect to the total molar amount of Ni, Co, Mn, and Al contained in the metal hydroxide is preferably 1.20 or less, more preferably 1.10 or less, and further preferably 1.05 or less. More specifically, the ratio (mixture ratio) of the molar amount of Li contained in the lithium compound with respect to the total molar amount of Ni, Co, Mn, and Al contained in the metal hydroxide is preferably 0.80 or more and 1.20 or less, more preferably 0.90 or more and 1.10 or less, and further preferably 0.95 or more and 1.05 or less.

From the viewpoint of facilitating crystallization reaction, as the baking conditions in the step (2), the baking temperature is preferably 650°C to 1000°C, more preferably 700°C to 950°C, and further preferably 750°C to 900°C. From the viewpoints of productivity and completing the crystallization reaction, the baking time is preferably 3 hours to 20 hours, more preferably 5 hours to 15 hours, and further preferably 6 hours to 12 hours.

The lithium metal composite oxide (positive electrode active material) obtained in the step (2) may be, e.g., a compound expressed by the formula (I).

$$Li_aNi_bCo_cMn_dM_eO_2+\alpha\cdots \qquad (I)$$

In the formula (I), a, b, c, d, e, and $\alpha$ satisfy $0.9 \leq a \leq 1.2$, $0 \leq b \leq 1$, $0 \leq c \leq 1$, $0 \leq d \leq 1$, $0 \leq e \leq 1$, $b + c + d + e = 1$, and $-0.2 \leq \alpha \leq 0.2$. From the viewpoint of improving the battery characteristics, b is preferably $0.5 \leq b \leq 0.9$, more preferably $0.6 \leq b \leq 0.9$, and further preferably $0.7 \leq b \leq 0.9$.

In the formula (I), M is at least one selected from F, P, Mg, Ca, Ba, Sr, Al, Cr, Fe, Ti, Zr, Y, Nb, Mo, Ta, W, Ce, and La. From the viewpoint of enhancing the discharge capacity of a lithium ion secondary battery, M is preferably at least one selected from F, Mg, Al, Cr, Fe, Ti, and Zr, and more preferably Al.

Specifically, the lithium metal composite oxide (positive electrode active material) obtained in the step (2) may be, e.g., $LiNi_{0.7}Co_{0.2}Al_{0.1}O_2$.

[Positive electrode for lithium ion battery]

Another aspect of the present disclosure relates to a positive electrode for a lithium ion battery that includes a positive electrode current collector and a mixture layer formed on the positive electrode current collector. In the positive electrode for a lithium ion secondary battery, the mixture layer contains the positive electrode active material produced by the producing method of the present disclosure, and a binder. The mixture layer can contain a conductive material and an optional component such as a thickener as needed.

Examples of the positive electrode current collector include metal foils such as a copper foil, an aluminum foil, and a stainless foil.

The binder plays a role of bonding the active material to a surface of the current collector. As the binder, a known binder can be used. Specific examples of the binder include polyvinylidene fluoride, polyvinyl alcohol, carboxymethyl cellulose, and polymer particles.

The conductive material is used for efficiently performing charge and discharge reactions and enhancing conductivity. Examples of the conductive material include carbon materials such as acetylene black, Ketjen black, and graphite.

Examples of the thickener include polysaccharide thickeners, alginic acid, carboxymethyl cellulose, starch, polyacrylic acid, polyvinyl alcohol, and polyvinyl pyrrolidone.

The positive electrode of the present disclosure can be obtained by, e.g., applying a mixture containing the positive electrode active material obtained by the producing method of the present disclosure, the conductive material, and the binder to the positive electrode current collector, and then drying the mixture.

Thus, another aspect of the present disclosure relates to the method for producing the positive electrode for a lithium ion secondary battery, the method including the following steps (3) and (4):

(3) mixing the positive electrode active material for a lithium ion secondary battery obtained by the producing method of the present disclosure, the conductive material, and the binder to obtain the positive electrode mixture paste; and
(4) applying the positive electrode mixture paste to the positive electrode current collector.

[Lithium ion secondary battery]

One aspect of the present disclosure relates to a lithium ion secondary battery including the positive electrode of the present disclosure. In one embodiment, the lithium ion secondary battery of the present disclosure may be that which includes the positive electrode of the present disclosure, a negative electrode, an electrolyte solution, and a separator. The negative electrode, the electrolyte solution, and the separator are not particularly limited, and may be a known negative electrode, electrolyte solution, and separator.
In regard to the embodiments described above, the present invention will be further disclosed with the embodiments below.

<1> A method for producing a positive electrode active material for a lithium ion secondary battery, the positive electrode active material consisting of a lithium metal composite oxide, the method including the following steps (1) and (2):

(1) mixing a dispersant (component A) being a copolymer containing a constitutional unit a1 derived from (meth)acrylic acid and a constitutional unit a2 derived from unsaturated dibasic acid or its anhydride, a salt (component B) of at least one metallic element selected from nickel, cobalt, manganese, and aluminium, an alkali (component C), and an aqueous medium to precipitate, as a coprecipitate, a metal hydroxide containing the at least one metallic element selected from nickel, cobalt, manganese, and aluminium; and
(2) baking a mixture containing the metal hydroxide obtained in the step (1) and a lithium compound to obtain the lithium metal composite oxide.

<2> The method for producing a positive electrode active material for a lithium ion secondary battery according to <1>, the method including the following steps (1) and (2):

(1) mixing a dispersant (component A) being a copolymer containing the constitutional unit a1 derived from (meth)acrylic acid and a constitutional unit a2 derived from at least one selected from maleic acid, fumaric acid, itaconic acid, and maleic anhydride, the copolymer having a total amount of the constitutional unit a1 and the constitutional unit a2 in all constitutional units constituting the copolymer that is 90 mol% or more, the copolymer having a weight average molecular weight of 25,000 or more and 60,000 or less, the copolymer having an average carboxylic acid concentration of 14.0 molar equivalent/kg or more and 16.0 molar equivalent/kg or less; the salt (component B) of at least one metallic element selected from nickel, cobalt, manganese, and aluminium; the alkali (component C) ; and the aqueous medium to precipitate, as a coprecipitate, a metal hydroxide containing the at least one metallic element selected from nickel, cobalt, manganese, and aluminium; and
(2) baking a mixture containing the metal hydroxide obtained in the step (1) and the lithium compound to obtain a lithium metal composite oxide.

<3> The method for producing a positive electrode active material for a lithium ion secondary battery according to <1> or <2>, the method including the following steps (1) and (2):

(1) mixing, at 5°C or more and 90°C or less, 0.01% by mass or more and 5% by mass or less of the dispersant (component A) being the copolymer containing the constitutional unit a1 derived from (meth)acrylic acid and the constitutional unit a2 derived from at least one selected from maleic acid, fumaric acid, itaconic acid, and maleic anhydride, the copolymer having the total amount of the constitutional unit a1 and the constitutional unit a2 in all constitutional units constituting the copolymer that is 90 mol% or more, the copolymer having the weight average molecular weight of 25,000 or more and 60,000 or less, the copolymer having the average carboxylic acid concentration of 14.0 molar equivalent/kg or more and 16.0 molar equivalent/kg or less; 5.0% by mass or more and 30.0% by mass or less of at least one (component B) selected from the group consisting of at least one sulfate, carbonate, and nitrate of at least one metallic element selected from nickel, cobalt, manganese, and aluminium; 4.0% by mass or more and 25.0% by mass or less of at least one alkaline agent (component C) selected from ammonia, lithium hydroxide, sodium hydroxide, and potassium hydroxide; and the aqueous medium to precipitate, as a coprecipitate, a metal hydroxide containing the at least one metallic element selected from nickel, cobalt, manganese, and aluminium, the metal hydroxide having a volume average particle diameter (D50) of 1 um or more and 20 um or less, the metal hydroxide having a specific surface area of 0.1 m$^2$/g or

more and 1.3 m²/g or less; and

(2) baking a mixture containing the metal hydroxide obtained in the step (1) and the lithium compound, the mixture having a ratio of a molar amount of Li contained in the lithium compound with respect to a total molar amount of Ni, Co, Mn, and Al contained in the metal hydroxide that is 0.80 or more and 1.20 or less to obtain a lithium metal composite oxide.

<4> The method for producing a positive electrode active material for a lithium ion secondary battery according to any one of <1> to <3>, the method including the following steps (1) and (2):

(1) mixing, at 20°C or more and 80°C or less, 0.1% by mass or more and 1% by mass or less of a dispersant (component A) being a copolymer containing the constitutional unit a1 derived from (meth)acrylic acid and the constitutional unit a2 derived from at least one selected from maleic acid, fumaric acid, itaconic acid, and maleic anhydride, the copolymer having a molar ratio of the constitutional unit a1 to the constitutional unit a2 that is 74/26 to 91/9, the copolymer having the total amount of the constitutional unit a1 and the constitutional unit a2 in all constitutional units constituting the copolymer that is 90 mol% or more, the copolymer having a weight average molecular weight of 30,000 or more and 58,000 or less, the copolymer having an average carboxylic acid concentration of 14.1 molar equivalent/kg or more and 15.0 molar equivalent/kg or less; 5.0% by mass or more and 30.0% by mass or less of at least one (component B) selected from the group consisting of at least one sulfate, carbonate, and nitrate of at least one metallic element selected from nickel, cobalt, manganese, and aluminium; 4.0% by mass or more and 25.0% by mass or less of at least one alkaline agent (component C) selected from ammonia, lithium hydroxide, sodium hydroxide, and potassium hydroxide; and the aqueous medium to precipitate, as a coprecipitate, a metal hydroxide containing the at least one metallic element selected from nickel, cobalt, manganese, and aluminium, the metal hydroxide having a volume average particle diameter (D50) of 5 um or more and 15 μm or less, the metal hydroxide having (D90 - D 10)/D50 of 0.8 or less, the metal hydroxide having a specific surface area of 0. 1 m²/g or more and 1.0 m²/g or less; and

(2) baking a mixture containing the metal hydroxide obtained in the step (1) and the lithium compound, the mixture having a ratio of the molar amount of Li contained in the lithium compound with respect to a total molar amount of Ni, Co, Mn, and Al contained in the metal hydroxide that is 0.90 or more and 1.10 or less to obtain a lithium metal composite oxide.

<5> The method for producing a positive electrode active material for a lithium ion secondary battery according to any one of <1> to <4>,

wherein a blending amount of the component B is 8.0% by mass or more and 20.0% by mass or less, and a blending amount of the component C is 6.0% by mass or more and 16.0% by mass or less.

<6> The method for producing a positive electrode active material for a lithium ion secondary battery according to any one of <1> to <5>, wherein the lithium metal composite oxide (positive electrode active material) obtained in the step (2) is a compound expressed by the formula (I):

$$Li_aNi_bCo_cMn_dM_eO_{2+\alpha} \cdots \qquad (I)$$

(in the formula (I), a, b, c, d, e, and $\alpha$ satisfy $0.9 \le a \le 1.2$, $0 \le b \le 1$, $0 \le c \le 1$, $0 \le d \le 1$, $0 \le e \le 1$, $b + c + d + e = 1$, and $-0.2 \le \alpha \le 0.2$).

<7> A method for producing a positive electrode for a lithium ion secondary battery, the method including the following steps (3) and (4):

(3) mixing the positive electrode active material for a lithium ion secondary battery obtained by the producing method according to any of <1> to <6>, a conductive material, and a binder to obtain a positive electrode mixture paste; and

(4) applying the positive electrode mixture paste to a positive electrode current collector.

Examples

Hereinafter, the present disclosure will be described by way of examples, but the present disclosure is not limited to the following examples.

1. Preparation of dispersant (component A)

[Dispersant A1]

First, 78.5 g of maleic anhydride and 80.0 g of ion exchanged water were charged into a reaction vessel equipped with a stirrer, a thermometer, a reflux condenser, a nitrogen inlet tube, and dropping funnels, and heated to 55°C. Then, 33.9 g of a 28% by mass aqueous ammonia solution was dropped. Thus, a maleic acid ammonium salt aqueous solution was obtained. At this time, a molar ratio of maleic acid to ammonia was 100/70.

Next, the maleic acid ammonium salt aqueous solution was heated to 100°C in a nitrogen stream. Then, while maintaining this temperature, 360.5 g of an 80% by mass acrylic acid aqueous solution and 209.9 g of a 35% by mass hydrogen peroxide aqueous solution were dropped through separate dropping funnels over 3.5 hours, and polymerization reaction was performed. After the completion of the dropping, the obtained mixture was aged at 100°C for 10 hours, and the polymerization reaction was completed.

After the completion of the reaction, the mixture was cooled. While maintaining a temperature of about 40°C, the mixture was neutralized with a 28% by mass aqueous ammonia solution so that the pH was 6 to 8. Then, until an acrylic acid-maleic acid copolymer with a concentration of 40% by mass was produced, ion exchanged water was added. Thus, an ammonium salt (dispersant A1) of the acrylic acid-maleic acid copolymer [acrylic acid/maleic acid = 83/17 (molar ratio)] (degree of neutralization of 100 mol%) was obtained. The dispersant A1 had a weight average molecular weight of 40000 and an average carboxylic acid concentration of 14.7 molar equivalent/kg.

[Dispersants A2 and A3]

Dispersants A2 and A3 were prepared in the same manner as the dispersant A1 except that the amounts of maleic anhydride, an 80% by mass acrylic acid aqueous solution, and a 35% by mass hydrogen peroxide aqueous solution were appropriately changed so that a molar ratio of acrylic acid/maleic acid in the dispersant A2 was 80/20 and that in the dispersant A3 was 91/9. The dispersant A2 had a weight average molecular weight of 39000 and an average carboxylic acid concentration of 14.8 molar equivalent/kg. The dispersant A3 had a weight average molecular weight of 33000 and an average carboxylic acid concentration of 14.3 molar equivalent/kg.

[Dispersant A4]

A dispersant A4 was prepared in the same manner as the dispersant A1 except that maleic anhydride was not added, 80.0 g of ion exchanged water was charged into the reaction vessel and heated to 55°C, and then 33.9 g of a 28% by mass aqueous ammonia solution was added. The dispersant A4 had a weight average molecular weight of 26000 and an average carboxylic acid concentration of 13.9 molar equivalent/kg.

<Measurement of weight average molecular weight of dispersant>

The weight average molecular weights of the dispersants were measured by gel permeation chromatography (GPC) under the following conditions. Table 1 indicates the results.

   Column: TSK PWXL + G4000 PWXL + G2500 PWXL (all of them were manufactured by TOSOH CORPORATION)
   Column temperature: 40°C
   Detector: RI
   Eluent: 0.2 mol/L phosphate buffer solution/acetonitrile (9/1)
   Flow rate: 1.0 mL/min
   Injection amount: 0.1 mL
   Reference: polyethylene glycol

2. Preparation of metal hydroxide particles

[Example 1]

A component A aqueous solution was prepared by mixing 7.5 g of the dispersant A1 (weight average molecular weight of 40,000, concentration of 40% by mass) and 149.6 g of aqueous ammonia with a concentration of 25% by mass (2.2 mol of ammonia). The aqueous ammonia used here was a neutralizing agent, and was not a component C.

As a component B, a component B aqueous solution was prepared by mixing 124.6 g of nickel sulfate $NiSO_4$ (0.81 mol in terms of nickel), 35.6 g of cobalt sulfate $CoSO_4$ (0.23 mol in terms of cobalt), 19.7 g of aluminium sulfate

$Al_2/SO_4)_3$ (0.12 mol in terms of aluminium), and 698 g of ion exchanged water.

Solid sodium hydroxide was dissolved in water to prepare 588.8 g of a sodium hydroxide aqueous solution (3.68 mol of sodium hydroxide, sodium hydroxide with a concentration of 25% by mass) as a component C aqueous solution.

Then, while the component B aqueous solution was stirred using a high-speed stirring apparatus, the component A aqueous solution was added to it, and the component C aqueous solution was added to it. A coprecipitate was confirmed in the obtained mixed aqueous solution (temperature of 65°C), and the stirring was continued for 30 minutes.

Next, the coprecipitate was filtered using a vacuum filter, washed with water, and then dried at 80°C for 10 hours to obtain metal hydroxide particles (specific surface area of 0.3 $m^2$/g) of Example 1.

[Example 2]

Metal hydroxide particles (specific surface area of 0.3 $m^2$/g) of Example 2 were obtained in the same manner as in Example 1 except that the dispersant A2 (weight average molecular weight of 39,000, concentration of 40% by mass) was used instead of the dispersant A1.

[Example 3]

Metal hydroxide particles (specific surface area of 0.3 $m^2$/g) of Example 3 were obtained in the same manner as in Example 1 except that the dispersant A3 (weight average molecular weight of 33,000, concentration of 40% by mass) was used instead of the dispersant A1.

[Comparative example 1]

Metal hydroxide particles (specific surface area of 0.2 $m^2$/g) of Comparative example 1 were obtained in the same manner as in Example 1 except that the dispersant A1 was not added.

[Comparative example 2]

Metal hydroxide particles (specific surface area of 0.2 $m^2$/g) of Comparative example 2 were obtained in the same manner as in Example 1 except that the dispersant A4 (weight average molecular weight of 26,000, concentration of 40% by mass) was used instead of the dispersant A1.

<Measurement of particle diameter of metal hydroxide particles>

The particle size distribution of the metal hydroxide particles was measured by dynamic light scattering using a particle size distribution analyzer (laser diffraction/scattering particle size distribution analyzer LA-920 manufactured by HORIBA Ltd.). The measurement was performed at room temperature (25°C). A particle diameter (D 10) corresponding to a particle diameter at which the cumulative volume of the particles reached 10% from the small particle diameter side, a particle diameter (D50, volume average particle diameter) corresponding to a particle diameter at which the cumulative volume reached 50% from the small particle diameter side, and a particle diameter (D90) corresponding to a particle diameter at which the cumulative volume reached 90% from the small particle diameter side were obtained in the measured particle size distribution. Table 1 indicates the results.

Moreover, a value of (D90 - D10)/D50 was calculated in each example. Table 1 indicates the results. It is indicated that as the value of (D90 - D 10)/D50 is smaller, the particle size distribution is sharper, and that as the value is greater, the particle size distribution is broader.

<Measurement of specific surface area of metal hydroxide particles>

A specific surface area of the metal hydroxide particles was measured by a nitrogen adsorption method using a specific surface area measuring device (FlowSorb III 2310 manufactured by Micromeritics).

3. Preparation of positive electrode active material

While a shear force was applied, a mixture of 130 g made of the metal hydroxide particles after drying (Examples 1-3 and Comparative examples 1-2) and 58.8 g of lithium hydroxide monohydrate was mixed using a Henschel mixer to obtain a powder mixture. The powder mixture was baked in a muffle furnace at 900°C for 10 hours to obtain a positive electrode active material (lithium metal composite oxide: $LiNi_{0.7}Co_{0.2}Al_{0.1}O_2$). The powder after baking was lightly crushed, and then used for evaluation of batteries.

4. Preparation of binder

First, in a 1 L four-necked separable glass flask were placed 74 g of MMA (methyl methacrylate, manufactured by Wako Pure Chemical Industries, Ltd.), 120 g of EA (ethyl acrylate, manufactured by Wako Pure Chemical Industries, Ltd.), 6 g of AA (acrylic acid, manufactured by Wako Pure Chemical Industries, Ltd.), and 340 g of ion exchanged water. This solution was stirred for a predetermined time (0.5 hours) in a nitrogen atmosphere. Then, the temperature of the reaction solution in the flask was increased to about 70°C. Subsequently, a polymerization initiator solution, in which 1 g of APS (ammonium persulfate) was dissolved in 10 g of ion exchanged water, was added to the flask, and the reaction solution in the flask was held at about 70°C to 75°C for 6 hours. Thus, the reaction solution was polymerized and aged, resulting in a polymer particle dispersion. Thereafter, the polymer particle dispersion in the flask was cooled to room temperature (25°C) and neutralized with 29.14 g of a 1 N NaOH aqueous solution. Then, aggregates were removed by using a 200 mesh filter cloth. The polymer particle dispersion was condensed to a concentration of about 40% by mass, so that a polymer particle dispersion being a binder was prepared.

5. Production of positive electrode for lithium ion secondary battery

First, 0.33 g of a conductive material (acetylene black, "Li-100" manufactured by Denka Company Limited), 4.4 g of a 1.5% by mass thickener aqueous solution (thickener was sodium carboxymethyl cellulose manufactured by Wako Pure Chemical Industries, Ltd.), and 10.23 g of the positive electrode active material (lithium metal composite oxide prepared using the metal hydroxide particles of each of Examples 1-3 and Comparative examples 1-2) were mixed to prepare a slurry [1].

Next, the slurry [1], 2.93 g of 1.5% by mass sodium carboxymethyl cellulose (manufactured by Wako Pure Chemical Industries, Ltd.), and 1.52 g of water were mixed to prepare a slurry [2].

Next, the slurry [2] and 0.83 g (in terms of solid content) of the prepared binder (polymer particle dispersion) were mixed to prepare a positive electrode mixture paste. A content (in terms of solid content) of each component in the positive electrode mixture paste was as follows: a content of the binder was 3% by mass, a content of the positive electrode active material was 93% by mass, a content of the conductive material was 3% by mass, and a content of the thickener was 1% by mass. The components were mixed using a "THINKY MIXER Awatori-Rentaroh (ARV-310)".

Next, the positive electrode mixture paste was applied to a stainless foil (manufactured by AS ONE Corporation) having a thickness of 10 pm so that a positive electrode capacity density was 1.0 mAh/cm$^2$, dried at 100°C using a vacuum desiccator for 12 hours to prepare a positive electrode (Examples 1-3 and Comparative examples 1-2) in which a mixture layer was formed on a current collector.

6. Production of coin cell

Each of the positive electrodes of Examples 1-3 and Comparative examples 1-2 was punched to a size with a diameter of 13 mm, and pressed. Then, a separator with diameter of 19 mm [manufactured by Hohsen Corp.] and a coin-shaped metallic lithium foil having a diameter of 15 mm and a thickness of 0.5 mm as a negative electrode were placed on the pressed positive electrode to produce a 2032 type coin cell. As an electrolyte solution, 1 M LiPF$_6$ EC/DEC (volume ratio = 3/7) was used.

7. Evaluation of battery

Charge-discharge characteristics in Examples 1-3 and Comparative examples 1-2 were evaluated using the following charge-discharge test.

[Charge-discharge test]

Using the produced coin cell, a charge-discharge test was performed in an environment of 30°C. In charging, a constant current charge was performed at 0.1 C (0.5 C on or after the fourth cycle) to 4.2 V, and then a constant voltage charge was performed for 10 minutes. In discharging, a constant current discharge was performed at 0.1 C (0.5 C on or after the fourth cycle) to 3.0 V. The coin cell was repeatedly charged and discharged in 50 cycles. A capacity retention rate was calculated by the following equation, and evaluated based on the following criteria. Table 1 indicates the results.

$$\text{Capacity retention rate (\%)} = \text{(discharge capacity in 50th cycle)/(discharge capacity in first cycle)}$$

<Evaluation criteria>

A: capacity retention rate of more than 95% and 100% or less
B: capacity retention rate of more than 90% and 95% or less
C: capacity retention rate of more than 85% and 90% or less
D: capacity retention rate of 85% or less

[TABLE 1]

| Table 1 | | | | Ex. 1 | Ex. 2 | Ex. 3 | Comp. Ex. 1 | Comp. Ex. 2 |
|---|---|---|---|---|---|---|---|---|
| Step (1) | Component B aqueous solution | Nickel sulfate NiSO$_4$ | Content (g) | 124.6 | 124.6 | 124.6 | 124.6 | 124.6 |
| | | Cobalt sulfate CoSO$_4$ | Content (g) | 35.6 | 35.6 | 35.6 | 35.6 | 35.6 |
| | | Aluminium sulfate Al$_2$(SO$_4$)$_3$ | Content (g) | 19.7 | 19.7 | 19.7 | 19.7 | 19.7 |
| | | Ion exchanged water | Content (g) | 698 | 698 | 698 | 698 | 698 |
| | Component A aqueous solution | Dispersant A1 (40% by mass) (molar ratio of acrylic acid/ maleic acid = 83/17, weight average molecular weight of 40000, average carboxylic acid concentration of 14.7 molar equivalent/kg) | Content (g) | 7.5 | 0 | 0 | 0 | 0 |
| | | Dispersant A2 (40% by mass) (molar ratio of acrylic acid/ maleic acid = 80/20, weight average molecular weight of 39000, average carboxylic acid concentration of 14.8 molar equivalent/kg) | Content (g) | 0 | 7.5 | 0 | 0 | 0 |
| | | Dispersant A3 (40% by mass) (molar ratio of acrylic acid/ maleic acid = 91/9, weight average molecular weight of 33000, average carboxylic acid concentration of 14.3 molar equivalent/kg) | Content (g) | 0 | 0 | 7.5 | 0 | 0 |
| | | Dispersant A4 (40% by mass) (molar ratio of acrylic acid/ maleic acid = 100/0, weight average molecular weight of 26000, average carboxylic acid concentration of 13.9 molar equivalent/kg) | Content (g) | 0 | 0 | 0 | 0 | 7.5 |
| | | Aqueous ammonia (25% by mass) | Content (g) | 149.6 | 149.6 | 149.6 | 149.6 | 149.6 |
| | Component C aqueous solution | Caustic soda (25% by mass) | Content (g) | 588.8 | 588.8 | 588.8 | 588.8 | 588.8 |
| Metal hydroxide particles | | Particle diameter D10 (μm) | | 5 | 6 | 6 | 6 | 6 |
| | | Particle diameter D50 (μm) | | 10 | 12 | 12 | 20 | 18 |
| | | Particle diameter D90 (μm) | | 12 | 15 | 15 | 30 | 28 |
| | | (D90-D10)/D50 | | 0.70 | 0.75 | 0.75 | 1.20 | 1.22 |

(continued)

| Table 1 | | Ex. 1 | Ex. 2 | Ex. 3 | Comp. Ex. 1 | Comp. Ex. 2 |
|---|---|---|---|---|---|---|
| Evaluation of battery | Capacity retention rate | A | B | B | D | C |
| * Ex.: Example, Comp. Ex.: Comparative Example | | | | | | |

From the results in Table 1, it was found that the metal hydroxide particles of Examples 1-3 had a particle diameter with a sharp particle size distribution. Moreover, it was found that the metal hydroxide particles of Examples 1-3 had a small value of D90 and fewer coarse particles than those of Comparative examples 1-2.

On the other hand, it was found that the metal hydroxide particles of Comparative examples 1-2 had a particle diameter with a wide (i.e., broad) particle size distribution. Moreover, it was found that the metal hydroxide particles of Comparative examples 1-2 had great values of D10 and D90, and contained relatively more fine particles and relatively more coarse particles.

In addition, it was found that the batteries in which the positive electrode active materials produced using the metal hydroxide particles of Examples 1-3 were used had a higher capacity retention rate and better battery characteristics than the batteries in which the positive electrode active materials produced using the metal hydroxide particles of Comparative examples 1-2 were used.

Industrial Applicability

The positive electrode active material obtained by the producing method of the present disclosure is useful as a positive electrode active material for a lithium ion secondary battery.

**Claims**

1. A method for producing a positive electrode active material for a lithium ion secondary battery, the positive electrode active material consisting of a lithium metal composite oxide, the method comprising the following steps (1) and (2) :

   (1) mixing a dispersant (a component A) being a copolymer comprising a constitutional unit a1 derived from (meth)acrylic acid and a constitutional unit a2 derived from unsaturated dibasic acid or an anhydride thereof, a salt (a component B) of at least one metallic element selected from nickel, cobalt, manganese, and aluminium, an alkali (a component C), and an aqueous medium to precipitate, as a coprecipitate, a metal hydroxide comprising the at least one metallic element selected from nickel, cobalt, manganese, and aluminium; and
   (2) baking a mixture comprising the metal hydroxide obtained in the step (1) and a lithium compound to obtain the lithium metal composite oxide.

2. The method according to claim 1, wherein the component A is neutralized with ammonium or an organic amine.

3. The method according to claim 1 or 2, wherein a weight average molecular weight of the component A is 25,000 or more and 60,000 or less.

4. The method according to any of claims 1 to 3, wherein a molar ratio (a1/a2) of the constitutional unit a1 to the constitutional unit a2 in the component A is 74/26 to 91/9.

5. The method according to any of claims 1 to 4, wherein an average carboxylic acid concentration (molar equivalent/kg) of the component A is 14.0 molar equivalent/kg or more and 16.0 molar equivalent/kg or less.

6. The method according to any of claims 1 to 5, wherein in the component A, a total amount of the constitutional unit a1 and the constitutional unit a2 in all constitutional units constituting the copolymer is 90 mol% or more.

7. The method according to any of claims 1 to 6, wherein a blending amount of the component A is 0.01% by mass or more and 5% by mass or less.

8. The method according to any of claims 1 to 7, wherein the salt of the component B is at least one selected from sulfate, carbonate, and nitrate.

9. The method according to any of claims 1 to 8, wherein a blending amount of the component B is 5.0% by mass or more and 30.0% by mass or less.

10. The method according to any of claims 1 to 9, wherein the component C is at least one alkaline agent selected from ammonia, lithium hydroxide, sodium hydroxide, and potassium hydroxide.

11. The method according to any of claims 1 to 10, wherein a blending amount of the component C is 4.0% by mass or more and 25.0% by mass or less.

12. The method according to any of claims 1 to 11, wherein a volume average particle diameter (D50) of the metal hydroxide obtained in the step (1) is 1 um or more and 20 pm or less.

13. The method according to any of claims 1 to 12, wherein a specific surface area of the metal hydroxide obtained in the step (1) is 0.1 $m^2$/g or more and 1.3 $m^2$/g or less.

14. The method according to any of claims 1 to 13, wherein (D90 - D10)/D50 of the metal hydroxide obtained in the step (1) is 0.8 or less.

15. The method according to any of claims 1 to 14, wherein in the mixture in the step (2), a ratio of a molar amount of Li contained in the lithium compound with respect to a total molar amount of Ni, Co, Mn, and Al contained in the metal hydroxide is 0.90 or more and 1.10 or less.

16. A method for producing a positive electrode for a lithium ion secondary battery, the method comprising the following the steps (3) and (4):

(3) mixing the positive electrode active material for a lithium ion secondary battery obtained by the method according to any of claims 1 to 15, a conductive material, and a binder to obtain a positive electrode mixture paste; and
(4) applying the positive electrode mixture paste to a positive electrode current collector.

**Patentansprüche**

1. Verfahren zur Herstellung eines

Positivelektrodenaktivmaterials für eine Lithium-Ionen-Sekundärbatterie, wobei das Positivelektrodenaktivmaterial aus einem Lithium-Metall-Kompositoxid besteht, wobei das Verfahren die folgenden Schritte (1) und (2) umfasst:

(1) das Mischen von einem Dispergiermittel (Komponente A), das ein Copolymer ist, das eine Struktureinheit a1, die von (Meth)acrylsäure stammt, und eine Struktureinheit a2, die von ungesättigter zweibasiger Säure oder einem Anhydrid davon stammt, umfasst, einem Salz (Komponente B) von mindestens einem Metallelement, ausgewählt aus Nickel, Cobalt, Mangan und Aluminium, einer Base (Komponente C) und einem wässrigen Medium, um als Copräzipitat ein Metallhydroxid auszufällen, das das mindestens eine Metallelement, ausgewählt aus Nickel, Cobalt, Mangan und Aluminium, umfasst; und
(2) das Brennen einer Mischung, die das in Schritt (1) erhaltene Metallhydroxid und eine Lithiumverbindung umfasst, um das Lithium-Metall-Kompositoxid zu erhalten.

2. Verfahren gemäß Anspruch 1, wobei die Komponente A mit Ammonium oder einem organischen Amin neutralisiert ist.

3. Verfahren gemäß Anspruch 1 oder 2, wobei das gewichtsmittlere Molekulargewicht der Komponente A 25.000 oder mehr und 60.000 oder weniger beträgt.

4. Verfahren gemäß einem der Ansprüche 1 bis 3, wobei in der Komponente A ein Molverhältnis (a1/a2) von der Struktureinheit a1 zu der Struktureinheit a2 74/26 bis 91/9 beträgt.

**5.** Verfahren gemäß einem der Ansprüche 1 bis 4, wobei eine durchschnittliche Carbonsäurekonzentration (Moläquivalent/kg) der Komponente A 14,0 Moläquivalent/kg oder mehr und 16,0 Moläquivalent/kg oder weniger beträgt.

**6.** Verfahren gemäß einem der Ansprüche 1 bis 5, wobei in der Komponente A die Gesamtmenge der Struktureinheit a1 und der Struktureinheit a2 an allen Struktureinheiten, die das Copolymer bilden, 90 Mol-% oder mehr beträgt.

**7.** Verfahren gemäß einem der Ansprüche 1 bis 6, wobei die Mischungsmenge der Komponente A 0,01 Massen-% oder mehr und 5 Massen-% oder weniger beträgt.

**8.** Verfahren gemäß einem der Ansprüche 1 bis 7, wobei das Salz der Komponente B mindestens eines, ausgewählt aus Sulfat, Carbonat und Nitrat, ist.

**9.** Verfahren gemäß einem der Ansprüche 1 bis 8, wobei die Mischungsmenge der Komponente B 5,0 Massen-% oder mehr und 30,0 Massen-% oder weniger beträgt.

**10.** Verfahren gemäß einem der Ansprüche 1 bis 9, wobei die Komponente C mindestens ein alkalisches Mittel, ausgewählt aus Ammoniak, Lithiumhydroxid, Natriumhydroxid und Kaliumhydroxid, ist.

**11.** Verfahren gemäß einem der Ansprüche 1 bis 10, wobei die Mischungsmenge der Komponente C 4,0 Massen-% oder mehr und 25,0 Massen-% oder weniger beträgt.

**12.** Verfahren gemäß einem der Ansprüche 1 bis 11, wobei der volumenmittlere Partikeldurchmesser (D50) des in Schritt (1) erhaltenen Metallhydroxids 1 um oder mehr und 20 um oder weniger beträgt.

**13.** Verfahren gemäß einem der Ansprüche 1 bis 12, wobei eine spezifische Oberfläche des in Schritt (1) erhaltenen Metallhydroxids 0,1 $m^2$/g oder mehr und 1,3 $m^2$/g oder weniger beträgt.

**14.** Verfahren gemäß einem der Ansprüche 1 bis 13, wobei (D90 - D10)/D50 des in Schritt (1) erhaltenen Metallhydroxids 0,8 oder weniger beträgt.

**15.** Verfahren nach einem der Ansprüche 1 bis 14, wobei in der Mischung in Schritt (2) ein Verhältnis von der Molmenge von Li, die in der Lithiumverbindung enthalten ist, zu der gesamten Molmenge von Ni, Co, Mn und Al, die in dem Metallhydroxid enthalten ist, 0,90 oder mehr und 1,10 oder weniger beträgt.

**16.** Verfahren zur Herstellung einer positiven Elektrode für eine Lithium-Ionen-Sekundärbatterie, wobei das Verfahren die folgenden Schritte (3) und (4) umfasst:

(3) das Mischen des Positivelektrodenaktivmaterials für eine Lithium-Ionen-Sekundärbatterie, erhalten durch das Verfahren gemäß einem der Ansprüche 1 bis 15, eines leitfähigen Materials und eines Bindemittels, um eine Positivelektrodenmischungspaste zu erhalten; und
(4) das Aufbringen der Positivelektrodenmischungspaste auf einen Positivelektrodenstromkollektor.

## Revendications

**1.** Procédé de production d'un matériau actif d'électrode positive pour une batterie secondaire au lithium-ion, le matériau actif d'électrode positive étant constitué d'un oxyde composite de lithium-métal, le procédé comprenant les étapes (1) et (2) suivantes :

(1) mélanger un dispersant (un composant A) qui est un copolymère comprenant un motif constitutif a1 dérivé de l'acide (méth)acrylique et un motif constitutif a2 dérivé d'un acide dibasique insaturé ou d'un anhydride de celui-ci, un sel (un composant B) d'au moins un élément métallique sélectionné parmi le nickel, le cobalt, le manganèse et l'aluminium, un alcali (un composant C), et un milieu aqueux pour précipiter, sous la forme d'un coprécipité, un hydroxyde de métal comprenant ledit au moins un élément métallique sélectionné parmi le nickel, le cobalt, le manganèse et l'aluminium ; et
(2) cuire un mélange comprenant l'hydroxyde de métal obtenu à l'étape (1) et un composé de lithium pour obtenir l'oxyde composite de lithium-métal.

**2.** Procédé selon la revendication 1, dans lequel le composant A est neutralisé avec de l'ammonium ou une amine organique.

**3.** Procédé selon la revendication 1 ou la revendication 2, dans lequel un poids moléculaire moyen en poids du composant A est de 25 000 ou plus et de 60 000 ou moins.

**4.** Procédé selon l'une quelconque des revendications 1 à 3, dans lequel un rapport molaire (a1/a2) du motif constitutif a1 au motif constitutif a2 dans le composant A est de 74/26 à 91/9.

**5.** Procédé selon l'une quelconque des revendications 1 à 4, dans lequel une concentration moyenne d'acide carboxylique (équivalent molaire/kg) du composant A est de 14,0 équivalent molaire/kg ou plus et de 16,0 équivalent molaire/kg ou moins.

**6.** Procédé selon l'une quelconque des revendications 1 à 5, dans lequel dans le composant A, une quantité totale du motif constitutif a1 et du motif constitutif a2 dans tous les motifs constitutifs constituant le copolymère est de 90 % en moles ou plus.

**7.** Procédé selon l'une quelconque des revendications 1 à 6, dans lequel une quantité de mélange du composant A est de 0,01 % en masse ou plus et de 5 % en masse ou moins.

**8.** Procédé selon l'une quelconque des revendications 1 à 7, dans lequel le sel du composant B est au moins l'un sélectionné parmi un sulfate, un carbonate et un nitrate.

**9.** Procédé selon l'une quelconque des revendications 1 à 8, dans lequel une quantité de mélange du composant B est de 5,0 % en masse ou plus et de 30,0 % en masse ou moins.

**10.** Procédé selon l'une quelconque des revendications 1 à 9, dans lequel le composant C est au moins un agent alcalin sélectionné parmi l'ammoniaque, l'hydroxyde de lithium, l'hydroxyde de sodium et l'hydroxyde de potassium.

**11.** Procédé selon l'une quelconque des revendications 1 à 10, dans lequel une quantité de mélange du composant C est de 4,0 % en masse ou plus et de 25,0 % en masse ou moins.

**12.** Procédé selon l'une quelconque des revendications 1 à 11, dans lequel un diamètre moyen de particule en volume (D50) de l'hydroxyde de métal obtenu à l'étape (1) est de 1 $\mu$m ou plus et de 20 $\mu$m ou moins.

**13.** Procédé selon l'une quelconque des revendications 1 à 12, dans lequel une surface spécifique de l'hydroxyde de métal obtenu à l'étape (1) est de 0,1 $m^2$/g ou plus et de 1,3 $m^2$/g ou moins.

**14.** Procédé selon l'une quelconque des revendications 1 à 13, dans lequel (D90 - D10)/D50 de l'hydroxyde de métal obtenu à l'étape (1) est de 0,8 ou moins.

**15.** Procédé selon l'une quelconque des revendications 1 à 14, dans lequel dans le mélange dans l'étape (2), un rapport d'une quantité molaire de Li contenue dans le composé de lithium à une quantité molaire totale de Ni, Co, Mn et Al contenue dans l'hydroxyde de métal est de 0,90 ou plus et de 1,10 ou moins.

**16.** Procédé de production d'une électrode positive pour une batterie secondaire au lithium-ion, le procédé comprenant les étapes (3) et (4) suivantes :

(3) mélanger le matériau actif d'électrode positive pour une batterie secondaire au lithium-ion obtenu par le procédé selon l'une quelconque des revendications 1 à 15, un matériau conducteur et un liant pour obtenir une pâte de mélange pour électrode positive ; et
(4) appliquer de la pâte de mélange pour électrode positive sur un collecteur de courant d'électrode positive.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011219328 A